(19) Europäisches Patentamt
European Patent Office
Office européen des brevets

(11) **EP 1 288 879 B1**

(12) **EUROPEAN PATENT SPECIFICATION**

(45) Date of publication and mention
of the grant of the patent:
**29.12.2004   Bulletin 2004/53**

(51) Int Cl.7: **G08B 13/16**

(21) Application number: **01830541.7**

(22) Date of filing: **16.08.2001**

(54) **Intrusion detection system using microwave barrier**

Einbruch-Detektierungssystem mit einer Microwellenschranke

Système de détection par barrière de micro-onde

(84) Designated Contracting States:
**AT BE CH CY DE DK ES FI FR GB GR IE IT LI LU MC NL PT SE TR**

(43) Date of publication of application:
**05.03.2003   Bulletin 2003/10**

(73) Proprietor: **Tecno Alarm S.N.C.**
**I-10156, Torino (IT)**

(72) Inventors:
 • **Negro, Giovanni**
   **10020 Baldissero (TO) (IT)**
 • **Condello, Rinaldo**
   **10078 Venaria (TO) (IT)**

(74) Representative: **Robba, Pierpaolo et al**
**Interpatent,**
**Via Caboto 35**
**10129 Torino (IT)**

(56) References cited:
**BE-A- 829 406              FR-A- 2 730 578**
**US-A- 5 287 111**

 • **PATENT ABSTRACTS OF JAPAN vol. 1998, no. 14, 31 December 1998 (1998-12-31) & JP 10 233620 A (TAIYO MUSEN KK), 2 September 1998 (1998-09-02)**

## Description

The present invention relates to systems for protection against unwanted accesses, and more particularly it concerns an intrusion detection system using a microwave barrier.

In the field of alarm systems and anti-theft systems for civil and industrial premises, there are known intrusion detection devices using volumetric detectors and anti-intrusion barriers operating in the microwave frequency range, typically 2 to 40 GHz. Such devices are capable of signalling the movement of a person even moving at the minimum possible speed.

Generally such devices comprise a transmitter and a receiver facing each other. The transmitter sends towards the receiver a microwave beam, continuous or preferably pulse-modulated to reduce consumption and decrease the average emission power, and that beam is converted at the receiver into a reference signal representing the rest condition of the barrier. In case the microwave beam is crossed by a solid body, there is an attenuation of the beam and hence a variation in the signal level at the receiver.

Yet such technique intrinsically lacks precision, since it does not allow distinguishing among beam crossing by two bodies of different sizes at different distances from the receiver, which bodies are however seen by the receiver under a same angle. For instance, a small animal near the receiver can be confused with a person far from the receiver. Thus a high number of false alarms are produced. Even by employing sophisticated signal processing, it is impossible to establish surely or with a high probability whether the barrier crossing is actually due to a person.

Document US 5 287 111 discloses a microwave Doppler shift motion detector of the prior art.

It is an object of the invention to provide an intrusion detection system that provides a substantially sure indication of whether the intrusion is actually due to a person.

The detection system according to the invention comprises: at least one pair of facing Doppler-effect detectors, equipped with a respective transmitting-receiving antenna for sending towards the remote detector a very narrow microwave beam and for receiving a corresponding beam reflected by a body possibly crossing the transmitted beam, said detectors generating electrical signals representative of said reflected beam; and a control unit connected to both detectors and comprising means for processing said electric signals, which processing means are arranged to analyse the frequency and the amplitude of said signals to detect the presence of said body, to determine the size thereof and to signal the intrusion in case the beam crossing by a body of predetermined size, in particular a human being, is detected.

The invention will be better understood with reference to the accompanying drawings, which show a preferred embodiment of the invention and in which:

- Fig. 1 is a diagram illustrating the principles of the device according to the invention;
- Figs. 2 and 3 are diagrams showing two different situations of barrier crossing by a target;
- Fig. 4 is a chart of the equivalent gain versus the target surface;
- Fig. 5 is a block diagram of the device according to the invention;
- Fig. 6 is a chart of the time relations of the operations carried out by both detectors;
- Fig. 7 is a chart of the reflected power measured at one of the detectors of the system shown in Fig. 5 in case of a small animal and a person; and
- Fig. 8 is a chart of the reflected power for both detectors of the system.

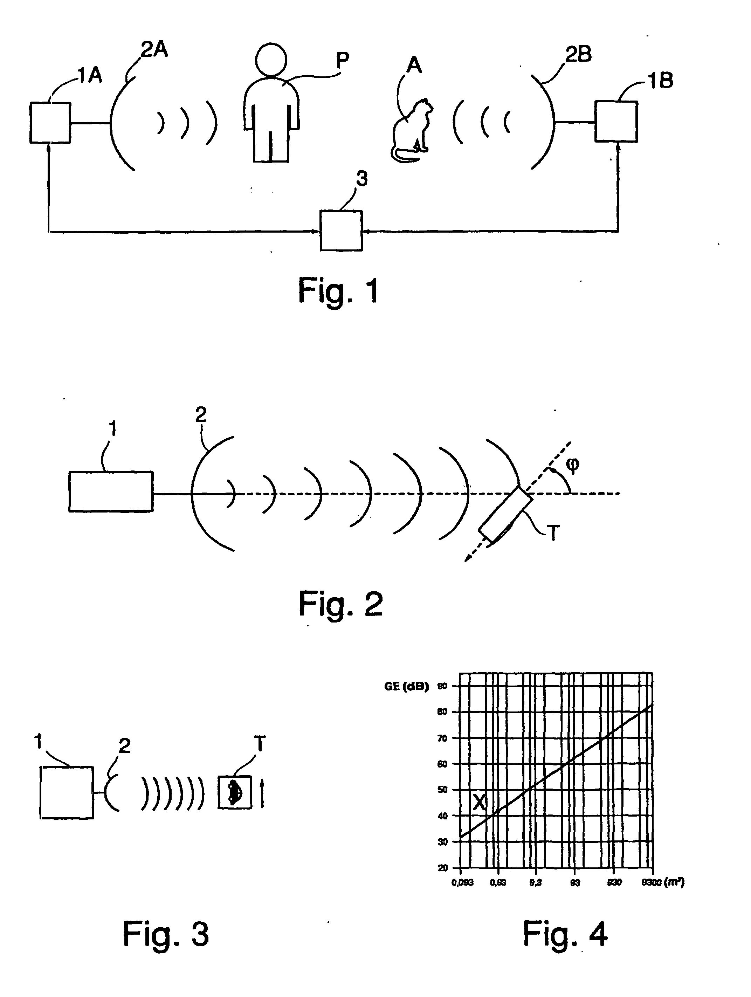

Referring to Fig. 1, the system according to the invention comprises, as a principle, a pair of Doppler-effect volumetric detectors 1A, 1B associated with a respective transmitting-receiving antenna 2A, 2B. Detectors 1A, 1B face each other and are arranged to generate a respective microwave beam at a frequency in the range typical of anti-intrusion applications (from some GHz to some ten GHz, e. g. 2 to 40 GHz) and to operate independently of each other. Each detector 1A, 1B receives the beam reflected by a possible intruder body (target) and outputs an own electric signal representing such reflected beam and affected by the target in a manner independent of the signal generated by the other detector. Processing means in a control unit 3 receives the electric signals and processes them to detect an actual intrusion.

By such an arrangement, a check on the possible target is made from two different positions. For a given target at a given distance, the signals from both detectors will have a well defined relation: by comparing such signals, the size of the target will be positively determined, thereby ascertaining whether such target is actually the target to be detected, for instance a person P shown in Fig. 1. Indeed the system is capable of determining when the barrier is crossed by a small animal A, for instance a bird, a dog or a cat, thereby avoiding false alarms.

Before examining in detail the embodiment of the invention, the theoretical principles on which the invention itself is based will be shortly described.

It is known that a Doppler-effect detector generates, when its action range is crossed by a target, an electrical signal that is obtained from the reflected beam and that, with respect to the transmitted beam, has a frequency variation proportional to the speed and the direction of the target displacement. Is also known that the target size and the target distance from the detector affect the power of the reflected signal and hence the amplitude of the signal generated by the detector.

More particularly, as far as the frequency is concerned, variation Fd due to Doppler effect is given by:

$$Fd = 2V (fo/c) \cos\varphi \qquad (1)$$

where:

- fo = transmitter frequency (Hz)
- c = speed of light
- V = target speed (m/s)
- φ = angle between the beam and target directions.

A frequency variation of the received signal therefor allows detecting a target displacing relative to the barrier beam, as shown in Fig. 2. It is to be appreciated that in case of a target moving perpendicularly to the beam (Fig. 3), theoretically Fd = 0. Yet, a body approaching the beam range of action causes an instant frequency variation that disappears when the body leaves the visibility range of the barrier, so that also such a situation can be detected.

As far as the amplitude of the signal reflected by the target towards a detector is concerned, the following relation applies:

$$Pin = Pout + 2 \cdot GANT + GE - 2 \cdot Atr \qquad (2)$$

where:

- Pin = power reflected towards the detector (dBm)
- Pout = transmitted power (dBm)
- GANT = gain of the antenna (dB)
- Atr = path attenuation in forward/return direction (dB)
- GE = equivalent target gain (dB).

Path attenuation Atr in turn is given by relation:

$$Atr = 20 \cdot lg(4 \cdot P \cdot d \cdot fo)/c \qquad (3)$$

where fo, c, Pout have the meaning seen above and d is the distance between target and detector.

Equivalent gain GE is a parameter increasing as the target area increases. The behaviour of GE versus the area is shown in Fig. 4 for a 10 GHz radar signal. For the purposes of the present invention, point X of the straight line (located at about 42 dB) is of interest, since it is the value of GE corresponding to a human body of average size. Assuming a target corresponding to a human being, distance d can be determined by using relations (2) and (3); conversely, if distance d is known, GE can be determined and the target size can be obtained therefrom.

In control unit 3 the above relations will be conveniently applied and an analysis of the results will be performed, by taking into account all parameters that, during construction, sensibly modify the theoretical calculations. Thus a highly precise result can be obtained, which meets the essential requirements of the invention, i. e. detecting an intrusion without generating false detections due to the limits of the environment where the barrier is located.

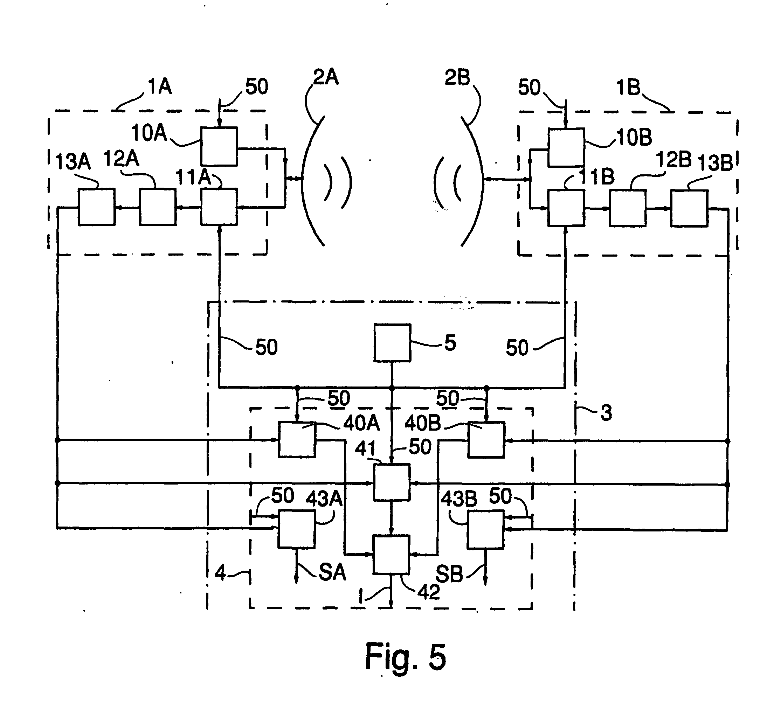

A preferred embodiment of a barrier device according to the invention will be now described with reference to Figs. 5 to 8.

In the block diagram of Fig. 5, the elements already disclosed with reference to Fig. 1 are denoted by the same reference numerals. Pairs of detectors 1A, 1B are located facing each other, according to conventional procedures, in the areas to be watched, usually outside buildings, to create anti-intrusion barriers. The detectors will have a range exceeding the range desired for the system. The respective antennas 2A, 2B are such as to ensure a narrow-beam coverage of the watched area. Reference numerals 10A, 10B denote the oscillators that form the transmitting part of the detectors and generate intermittent (pulsed) signals at the desired frequency. Reference numerals 11A, 11B denote the receivers.

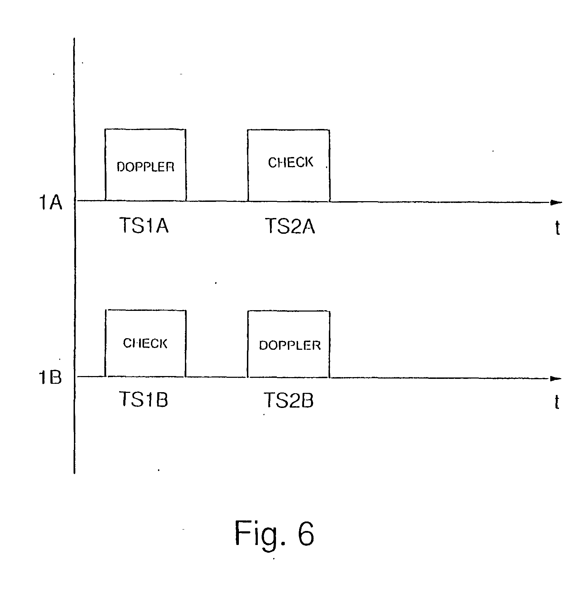

The detectors must operate independently of each other and they must not give rise to interference between the two beams. This may be achieved through an alternate operation of the detectors. Control unit 3 will thus comprise, besides means 4 for processing the signals coming from receivers 11A, 11B, synchronisation means 5 connected to transmitters 10A, 10B and receivers 11A, 11B through a line 50, to establish the desired alternation between the operations of detectors 1A, 1B. More particularly, the synchronisation means may create different operation time slots for each detector, and the detector will perform different functions in the different time slots. For instance, as shown in Fig. 6, a first time slot TS1A and TS2B, respectively, may be devoted to the operation related with the actual intrusion detection. Such first slot is labelled "Doppler". A second time slot TS1B and TS2A, respectively, ("Check") may be devoted to a functionality check on the device, to detect barrier malfunctioning or tampering, such as modifications of the orientation or removal of a detector. In practice, that functionality check may be carried out by detecting, at each detector, the steady presence of the signal emitted by the other detector or the presence of an anti-masking code. In case of pulse transmission, the presence of a pulse is recognised because of the reception of the same pulse at the opposed detector, said presence being steady even though intermittent. An anti-masking code is instead a complex code univocally indicating the occurrence of a transmission: the code must be always present, and its absence indicates a masking or a tampering.

Advantageously, the two slots will be organised so that while a detector carries out the operations related with intrusion detection, the other one performs the operations related with functionality check.

Besides receivers 11A, 11B, detectors 1A, 1B further comprise respective analogue amplifiers 12A, 12B, amplifying the signals generated by the receivers and sending the amplified signals to coherence verification circuits 13A, 13B, respectively. This structure for the Doppler-effect detectors is conventional. The coherence verification circuits check that the received signal has a certain coherence with respect to a mask indicating that the beam has been crossed by a target. Possible electrical or radio-electrical noises or noises of other kind, giving rise to a "false" detection of a movement, are partly eliminated at this circuit level.

The signals outgoing from coherence verification circuits 13A, 13B are then fed to processing means 4. The latter comprises, as main components, a pair of circuits 40A, 40B analysing the frequency of the signals supplied by detectors 1A, 1B, and a circuit 41 analysing the amplitude of those signals. Circuits 40A and 40B as well as circuit 41 receive timing and/or enabling signals from synchronising means 5 through line 50.

Circuits 40A, 40B check whether the received signals actually have undergone the frequency variations caused by a moving target crossing the beam, that is variations meeting relation (1) or corresponding with those due to a target perpendicularly crossing the beam. In the affirmative, the circuits generate a respective signal indicating that a moving target has been detected.

Amplitude analysis circuit 41 has in turn the task of determining the size of the target crossing the barrier. To this aim, circuit 41 will check whether the power of the reflected beam received by each detector during time slots TS1A, TS2B (Fig. 6) corresponds with the power the beam should have if crossed by a human being, and whether the ratio between the two power values is the ratio due to beams reflected by a human being towards detectors 1A, 1B. Even circuit 41 will output, in case of successful result of the checks, a signal indicating that detection has taken place.

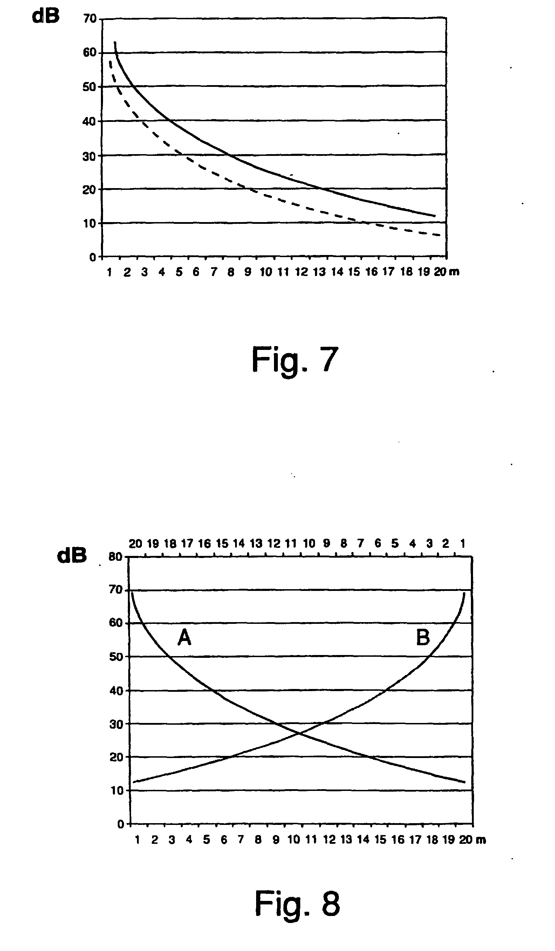

In order to better understand those operations, the charts in Figs. 7 and 8 can be considered. Those charts show the power reflected by a target (and more particularly the power level above the noise background) versus the distance from the detectors. The charts are plotted by applying relations (2) and (3) and assuming, by way of example, that the frequency of transmitters 10A, 10B is 10.4 GHz, the antenna gain is +13 dB, the transmitter output power is 10 mW, the receiver sensitivity is -90 dB and the distance between the detectors is 20 m. Fig. 7 shows the behaviour of the power reflected by a human being (solid line) and by a small animal (dashed line). The two curves are substantially parallel to each other but, being the reflected power proportional to GE (see relation (2) and Fig. 4), the values for a human being always exceed by some dB the values for a small animal. Fig. 8 the shows the behaviour of the level above the noise background for the power reflected by a human being towards detectors 1A, 1B (curves A, B). The distances from detector 1A are indicated below the chart and the distances from detector 1B are indicated above the chart, Of course, the two curves are symmetrical and will cross at half the distance from the detectors (10 m in the example).

Thus, a comparison between the power values concerning both detectors allows determining whether the detectors receive beams reflected by a same target (both values must lie on a same vertical line in Fig. 8) and hence determining the distance between the target and each detector. Once the distance has been determined, the values of the individuals signals allow ascertaining whether the target actually is a human being.

As a numerical example, let us assume that the value detected by one detector, e.g. detector 1A, exceeds the value of the other detector by about 20 dB. This indicates that the target is 5 m far from detector 1A and 15 m far from detector 1B (see Fig. 8). In order the target can be considered a human being, the amplitudes of such signals must correspond to levels above noise of about 35 dB for the signal of detector 1A and of about 15 dB for the signal of detector 1B.

Circuits 40A, 40B, 41 are then followed by a circuit 42 generating a detected intrusion signal. If all three circuits have emitted a signal of occurred detection, circuit 42 generates the detected intrusion signal I for actuating an alarm device (not shown).

Processing means 4 further comprises circuits 43A, 43B for detecting the signal used for the functionality check (which signal is assumed to be generated by coherence verification circuits 13A, 13B), which generate respective alarm signals in case detection does not take place. The nature of such circuits depends on the check carried out. Of course, such circuits will operate only during slots TS2A, TS1B and will receive the proper enabling and/or timing signals from synchronisation means 5.

The device of the invention has been disclosed with reference to a particular exemplary embodiment. However, the skilled in the art will readily recognise that several modified embodiments exist within the same inventive principle. More particularly, the beams generated by the detectors may have different frequency and/or polarisation and the alternate operation can be used jointly with the frequency and/or polarisation diversity. Moreover, the architecture shown for control unit 3 is merely a functional architecture: in practice, circuits 40A, 40B, 41 and 42 could be made by a pair of frequency detectors and a pair of amplitude detectors (or a single frequency detector and a single amplitude detector alternately connected to detectors 1A, 1B) supplying with the detected values a processing unit that carries out the analysis described above and performs also the tasks of circuit 42. Moreover, that unit could be connected also to circuits 43 and generate alarm signals SA, SB.

**Claims**

1. Intrusion detection system using a microwave barrier, **characterised in that** it comprises:

   - at least one pair of facing Doppler-effect detectors (1A, 1B), equipped with a respective transmitting-receiving antenna (2A, 2B) for sending towards the remote detector a very narrow microwave beam and for receiving at least one corresponding beam reflected by a body possibly crossing the transmitted beam, said detectors (1A, 1B) generating electrical signals representative of said reflected beam;
   - a control unit (3) connected to both detectors (1A, 1B) and comprising means (4) for processing said electric signals, said processing means being arranged to analyse the frequency and the amplitude of said signals in order to detect the presence of said body (T), to determine the size thereof and to signal the intrusion in case said analysis reveals that said body (T) is a body of predetermined size.

2. A system according to claim 1, **characterised in that** said processing means (4) comprises:

   - frequency measuring and analysing means (40A, 40B), connected to both detectors (1A, 1B) and arranged to receive said electric signals, to detect whether they have undergone frequency variations corresponding to variations induced by Doppler effect by a moving body (T) crossing the beam, and to output, in the affirmative, a signal indicating that detection has taken place;
   - amplitude measuring and analysing means (41), connected to both detectors (1A, 1B) and arranged: to receive said electric signals; to compare the amplitudes thereof in order to check whether said signals are representative of beams reflected by a same body and to determine the distance of said body from both detectors (1A, 1B); to detect, based on the amplitude values of each signal and on the distance determined for the body, whether said body (T) is a body of said predetermined size; and to output, in case of positive results of said checks, a signal indicating that detection of the presence of a body of said predetermined size has taken place.

3. A system according to claim 2, **characterised in that** said processing means (4) further comprises intrusion signalling means (42), connected to the output of the frequency and amplitude analysing means (40A, 40B, 41), and arranged to generate a detected intrusion signal (I) when both the frequency analysing means (40A, 40B) and the amplitude analysing means (41) generate the signal indicating that detection has taken place.

4. A system according to claim 1, **characterised in that** said processing means (4) comprises:

   - means for measuring the frequency and the amplitude of the signals generated by both detectors (1A, 1B); and
   - a processing unit connected to said measuring means and arranged: to analyse the frequency of said signals in order to detect frequency variations corresponding to variations induced by Doppler effect by a moving body (T) crossing the beam; to compare the amplitudes of said signals in order to check whether they correspond to the powers of beams reflected by a same body (T) and to determine the distances of said body (T) from both detectors (1A, 1B); to check whether the amplitudes of said signals correspond to the powers of beams reflected by a same body (T) of said predetermined size which is spaced apart from the detectors (1A, 1B) by the distances determined; and to generate a signal indicating intrusion detection in case the amplitude and frequency analysis reveals that the beam has been crossed by a body (T) of said predetermined size.

5. A system according to any preceding claim, **characterised in that** said processing means (4) is arranged to generate the intrusion indicating signal when it detects the beam crossing by a human being.

6. A system according to any preceding claim, **characterised in that** said control unit (3) further comprises synchronisation means (5) arranged to alternately operate the detectors (1A, 1B) for operations based on Doppler effect and specifically concerning the detection of a possible intrusion, and to time accordingly the operations of said processing means (4).

7. A system according to claim 6, **characterised in that** said synchronisation means (5) are arranged to cause each detector (1A, 1B) to operate in two different time slots (TS1A, TS2A, TS1B, TS2B), of which a first one (TS1A, TS2B) is devoted to the operations based on Doppler effect and the second one (TS2A, TS1B) is devoted to a functionality check on the system.

8. A system according to claim 7, **characterised in that** said synchronisation means (5) is arranged to control the detectors (1A, 1B) and the processing means (4) so that, while the operations based on Doppler effect are carried out at a first detector (1A, 1B), the operations related with the functionality check are carried out at the other detector (1B, 1A).

9. A system according to claim 7 or 8, **characterised in that** during said second time slot (TS2A, TS1B), each detector (1A, 1B) is enabled to transmit an anti-masking code towards the other detector (1B, 1A) and to receive an anti-masking code transmitted by said other detector (1B, 1A).

10. A system according to claim 7 or 8, **characterised in that** during said second time slot (TS2A, TS1B) each detector (1A, 1B) is enabled to check whether the beam transmitted by said other detector (1B, 1A) is present.

11. A system according to any of claims 1 to 9, **characterised in that** said processing means (4) further comprises means (43A, 43B), connected to each detector (1A, 1B) and operated during said second time slot (TS2A, TS1B), for detecting said anti-masking code in the signals received by the respective detector.

12. A system according to any of claims 1 to 8 and 10, **characterised in that** said processing means (4) further comprises means (43A, 43B), connected to each detector (1A, 1B) and operated during said second time slot (TS2A, TS1B), for detecting the presence of the beam transmitted by said other detector (1B, 1A).

13. A system according to any preceding claim, **characterised in that** the detectors (1A, 1B) are arranged to generate beams with different frequency and/or polarisation.

## Patentansprüche

1. Einbruchserkennungssystem, das eine Mikrowellenschranke verwendet, **dadurch gekennzeichnet, dass** es Folgendes umfasst:

 - mindestens ein Paar gegenüberliegender Dopplereffekt-Detektoren (1A, 1B), die mit einer jeweiligen Sende-Empfangs-Antenne (2A, 2B) ausgestattet sind, um dem entfernten Detektor einen sehr schmalen Mikrowellenstrahl zuzuschicken und mindestens einen entsprechenden Strahl zu empfangen, der von einem Körper reflektiert wird, der gegebenenfalls den übertragenen Strahl durchquert, wobei die Detektoren (1A, 1B) elektrische Signale erzeugen, die für den reflektierten Strahl charakteristisch sind;

 - eine Steuereinheit (3), die an die beiden Detektoren (1A, 1B) angeschlossen ist und Mittel (4) umfasst, um die elektrischen Signale zu verarbeiten, wobei die Verarbeitungsmittel angeordnet sind, um die Frequenz und die Amplitude der Signale zu analysieren, um die Anwesenheit des Körpers (T) zu erkennen, um seine Größe zu bestimmen und den Einbruch anzuzeigen, falls die Analyse ergibt, dass der Körper (T) ein Körper einer vorgegebenen Größe ist.

2. System nach Anspruch 1, **dadurch gekennzeichnet, dass** die Verarbeitungsmittel (4) Folgendes umfassen:

 - Mittel (40A, 40B) zum Messen und Analysieren der Frequenz, die an die beiden Detektoren (1A, 1B) angeschlossen und angeordnet sind, um die elektrischen Signale zu empfangen, um zu erkennen, ob sie Frequenzänderungen erfahren haben, die den Änderungen entsprechen, die durch den Dopplereffekt eines sich bewegenden Körpers (T), der den Strahl durchquert, hervorgerufen werden, und wenn ja, ein Signal auszugeben, das angibt, dass eine Erkennung stattgefunden hat;

 - Mittel (41) zum Messen und Analysieren der Amplitude, die an die beiden Detektoren (1A, 1B) angeschlossen und angeordnet sind: um die elektrischen Signale zu empfangen; um ihre Amplituden zu vergleichen, um zu kontrollieren, ob die Signale für Strahlen charakteristisch sind, die von ein und demselben Körper reflektiert werden, und um den Abstand des Körpers von den beiden Detektoren (1A, 1B) zu bestimmen; um auf der Basis der Amplitudenwerte eines jeden Signals und des für den Körper bestimmten Abstands zu erkennen, ob der Körper (T) ein Körper der vorgegebenen Größe ist; und um bei positiven Ergebnissen der Kontrollen ein Signal auszugeben, das angibt, dass eine Erkennung der Anwesenheit eines Körpers der vorgegebenen Größe stattgefunden hat.

3. System nach Anspruch 2, **dadurch gekennzeichnet, dass** die Verarbeitungsmittel (4) ferner Einbruchsmeldungsmittel (42) umfassen, die an den Ausgang der Frequenz- und Amplituden-Analysemittel (40A, 40B, 41) angeschlossen und angeordnet sind, um ein erkanntes Einbruchssignal (I) zu erzeugen, wenn sowohl die Frequenzanalysemittel (40A, 40B) als auch die Amplitudenanalysemittel (41) das Signal erzeugen, das angibt, dass eine Erkennung stattgefunden hat.

4. System nach Anspruch 1, **dadurch gekennzeichnet, dass** die Verarbeitungsmittel (4) Folgendes umfassen:

- Mittel zum Messen der Frequenz und der Amplitude der von den beiden Detektoren (1A, 1B) erzeugten Signale; und

- eine Verarbeitungseinheit, die an die Messmittel angeschlossen und angeordnet ist: um die Frequenz der Signale zu analysieren, um Frequenzänderungen zu erkennen, die Änderungen entsprechen, die durch den Dopplereffekt eines sich bewegenden Körpers (T), der den Strahl durchquert, hervorgerufen werden; um die Amplituden der Signale zu vergleichen, um zu kontrollieren, ob sie den Leistungen der Strahlen entsprechen, die von ein und demselben Körper (T) reflektiert werden, und um die Abstände des Körpers (T) von den beiden Detektoren (1A, 1B) zu bestimmen; um zu kontrollieren, ob die Amplituden der Signale den Leistungen der Strahlen entsprechen, die von ein und demselben Körper (T) der vorgegebenen Größe reflektiert werden, der von den Detektoren (1A, 1B) um die bestimmten Abstände beabstandet ist; und um ein Signal zu erzeugen, dass eine Einbruchserkennung angibt, falls die Analyse der Amplitude und der Frequenz ergibt, dass der Strahl von einem Körper (T) der vorgegebenen Größe durchquert wurde.

5. System nach einem der vorhergehenden Ansprüche, **dadurch gekennzeichnet, dass** die Verarbeitungsmittel (4) angeordnet sind, um das Einbruchsangabesignal zu erzeugen, wenn sie erkennen, dass der Strahl von einem Menschen durchquert wird.

6. System nach einem der vorhergehenden Ansprüche, **dadurch gekennzeichnet, dass** die Steuereinheit (3) ferner Synchronisierungsmittel (5) umfasst, die angeordnet sind, um abwechselnd die Detektoren (1A, 1B) für Vorgänge zu betätigen, die auf dem Dopplereffekt beruhen und insbesondere die Erkennung eines möglichen Einbruchs betreffen, und um entsprechend die Vorgänge der Verarbeitungsmittel (4) einzustellen.

7. System nach Anspruch 6, **dadurch gekennzeichnet, dass** die Synchronisierungsmittel (5) angeordnet sind, um jeden Detektor (1A, 1B) zu veranlassen, in zwei unterschiedlichen Zeitabschnitten (TS1A, TS2A, TS1B, TS2B) zu funktionieren, deren erster (TS1A, TS2B) für auf dem Dopplereffekt beruhende Vorgänge gedacht ist und deren zweiter (TS2A, TS1B) für eine Funktionskontrolle des Systems gedacht ist.

8. System nach Anspruch 7, **dadurch gekennzeich-**

**net, dass** die Synchronisierungsmittel (5) angeordnet sind, um die Detektoren (1A, 1B) und die Verarbeitungsmittel (4) zu steuern, so dass, während die auf dem Dopplereffekt beruhenden Vorgänge an einem ersten Detektor (1A, 1B) ausgeführt werden, die mit der Funktionskontrolle verbundenen Vorgänge an dem anderen Detektor (1B, 1A) ausgeführt werden.

9. System nach Anspruch 7 oder 8, **dadurch gekennzeichnet, dass** während des zweiten Zeitabschnitts (TS2A, TS1B) jeder Detektor (1A, 1B) einen Abdecküberwachungscode an den anderen Detektor (1B, 1A) übertragen und einen von dem anderen Detektor (1B, 1A) übertragenen Abdecküberwachungscode empfangen kann.

10. System nach Anspruch 7 oder 8, **dadurch gekennzeichnet, dass** während des zweiten Zeitabschnitts (TS2A, TS1B) jeder Detektor (1A, 1B) überprüfen kann, ob der von dem anderen Detektor (1B, 1A) übertragene Strahl vorhanden ist.

11. System nach einem der Ansprüche 1 bis 9, **dadurch gekennzeichnet, dass** die Verarbeitungsmittel (4) ferner Mittel (43A, 43B) umfassen, die an jeden Detektor (1A, 1B) angeschlossen sind und während des zweiten Zeitabschnitts (TS2A, TS1B) betätigt werden, um den Abdecküberwachungscode in den von dem jeweiligen Detektor empfangenen Signalen zu erkennen.

12. System nach einem der Ansprüche 1 bis 8 und 10, **dadurch gekennzeichnet, dass** die Verarbeitungsmittel (4) ferner Mittel (43A, 43B) umfassen, die an jeden Detektor (1A, 1B) angeschlossen sind und während des zweiten Zeitabschnitts (TS2A, TS1B) betätigt werden, um das Vorhandensein des von dem anderen Detektor (1B, 1A) übertragenen Strahls zu erkennen.

13. System nach einem der vorhergehenden Ansprüche, **dadurch gekennzeichnet, dass** die Detektoren (1A, 1B) angeordnet sind, um Strahlen mit unterschiedlicher Frequenz und/oder Polarisation zu erzeugen.

**Revendications**

1. Système de détection d'intrusion utilisant un barrage hyperfréquence, **caractérisé en ce qu'**il comprend :

- au moins une paire de détecteurs à effet Doppler se faisant face (1A, 1B), équipée d'une antenne d'émission et de réception respective (2A, 2B) pour envoyer vers le détecteur distant un faisceau hertzien très étroit et pour recevoir au moins un faisceau correspondant réfléchi par un corps traversant éventuellement le faisceau émis, lesdits détecteurs (1A, 1B) générant des signaux électriques représentatifs dudit faisceau réfléchi ;

- une unité de commande (3) raccordée aux deux détecteurs (1A, 1B) et comprenant des moyens (4) pour traiter lesdits signaux électriques, lesdits moyens de traitement étant disposés pour analyser la fréquence et l'amplitude desdits signaux afin de détecter la présence dudit corps (T) pour déterminer la taille de celui-ci et pour signaler l'intrusion au cas où ladite analyse révèlerait que ledit corps (T) est un corps de taille prédéterminée.

2. Système selon la revendication 1, **caractérisé en ce que** lesdits moyens de traitement (4) comprennent :

- des moyens de mesure et d'analyse de fréquence (40A, 40B) raccordés aux deux détecteurs (1A, 1B) et disposés pour recevoir lesdits signaux électriques, pour détecter s'ils ont subi des variations de fréquence correspondant aux variations induites par l'effet Doppler par un corps mobile (T) traversant le faisceau, et pour fournir en sortie, dans le cas affirmatif, un signal indiquant que la détection a eu lieu ;
- des moyens de mesure et d'analyse d'amplitude (41), raccordés aux deux détecteurs (1A, 1B) et disposés pour recevoir lesdits signaux électriques ; pour comparer les amplitudes de ceux-ci afin de vérifier si lesdits signaux sont représentatifs des faisceaux réfléchis par un même corps et pour déterminer la distance dudit corps à partir des deux détecteurs (1A, 1B) ; pour détecter, en se basant sur les valeurs d'amplitude de chaque signal et sur la distance déterminée pour le corps, si ledit corps (T) est un corps de ladite taille prédéterminée ; et pour fournir en sortie, en cas de résultats positifs desdits contrôles, un signal indiquant que la détection de la présence d'un corps de ladite taille prédéterminée a eu lieu.

3. Système selon la revendication 2, **caractérisé en ce que** lesdits moyens de traitement (4) comprennent en outre des moyens de signalisation d'intrusion (42), raccordés à la sortie des moyens d'analyse de fréquence et d'amplitude (40A, 40B, 41), et disposés pour générer un signal d'intrusion détecté (I) lorsque les deux moyens d'analyse de fréquence (40A, 40B) et les moyens d'analyse d'amplitude (41) génèrent le signal indiquant que la détection a eu lieu.

4. Système selon la revendication 1, **caractérisé en ce que** lesdits moyens de traitement (4) comprennent :

- des moyens pour mesurer la fréquence et l'amplitude des signaux générés par les deux détecteurs (1A, 1B) ; et
- une unité de traitement raccordée auxdits moyens de mesure et agencée pour analyser la fréquence desdits signaux afin de détecter les variations de fréquence correspondant aux variations induites par l'effet Doppler par un corps mobile (T) traversant le faisceau ; pour comparer les amplitudes desdits signaux afin de vérifier s'ils correspondent aux puissances des faisceaux réfléchis par un même corps (T) et pour déterminer les distances dudit corps (T) depuis les deux détecteurs (1A, 1B) ; pour vérifier si les amplitudes desdits signaux correspondent aux puissances des faisceaux réfléchis par un même corps (T) de ladite taille prédéterminée qui est espacée depuis les détecteurs (1A, 1B) par les distances déterminées ; et pour générer un signal indiquant une détection d'intrusion au cas où l'analyse d'amplitude et de fréquence révèlerait que le faisceau a été traversé par un corps (T) de ladite taille prédéterminée.:

5. Système selon l'une quelconque des revendications précédentes, **caractérisé en ce que** lesdits moyens de traitement (4) sont disposés pour générer le signal indiquant l'intrusion lorsqu'il détecte la traversée du faisceau par un être humain.

6. Système selon l'une quelconque des revendications précédentes, **caractérisé en ce que** ladite unité de commande (3) comprend en outre des moyens de synchronisation (5) disposés pour faire fonctionner en alternance les détecteurs (1A, 1B) pour des opérations basées sur l'effet Doppler et concernant spécifiquement la détection d'une intrusion possible, et pour synchroniser en conséquence les opérations desdits moyens de traitement (4).

7. Système selon la revendication 6, **caractérisé en ce que** lesdits moyens de synchronisation (5) sont disposés pour faire fonctionner chaque détecteur (1A, 1B) dans deux intervalles de temps différents (TS1A, TS2A ; TS1B, TS2B) dont un premier (TS1A, TS2B) est consacré aux opérations basées sur l'effet Doppler et le second (TS2A, TS1B) est consacré à un contrôle de fonctionnalité sur le système.

8. Système selon la revendication 7, **caractérisé en ce que** lesdits moyens de synchronisation (5) sont disposés pour commander les détecteurs (1A, 1B) et les moyens de traitement (4) de sorte que, alors que les opérations basées sur l'effet Doppler sont effectuées au niveau d'un premier détecteur (1A, 1B), les opérations liées au contrôle de fonctionnalité soient effectuées au niveau de l'autre détecteur (1B, 1A).

9. Système selon la revendication 7 ou 8, **caractérisé en ce que** pendant ledit second intervalle de temps (TS2A, TS1B), chaque détecteur (1A, 1B) est autorisé à transmettre un code d'anti-masquage vers l'autre détecteur (1B, 1A) et à recevoir un code d'anti-masquage transmis par ledit autre détecteur (1B, 1A).

10. Système selon la revendication 7 ou 8, **caractérisé en ce que** pendant ledit second intervalle de temps (TS2A, TS1B), chaque détecteur (1A, 1B) est autorisé à vérifier si le faisceau transmis par ledit autre détecteur (1B, 1A) est présent.

11. Système selon l'une quelconque des revendications 1 à 9, **caractérisé en ce que** lesdits moyens de traitement (4) comprennent en outre des moyens (43A, 43B), raccordés à chaque détecteur (1A, 1B) et actionnés pendant ledit second intervalle de temps (TS2A, TS1B) pour détecter ledit code d'anti-masquage dans les signaux reçus par le détecteur respectif.

12. Système selon l'une quelconque des revendications 1 à 8 et 10, **caractérisé en ce que** lesdits moyens de traitement (4) comprennent en outre des moyens (43A, 43B) raccordés à chaque détecteur (1A, 1B) et actionnés pendant ledit second intervalle de temps (TS2A, TS1B) pour détecter la présence du faisceau transmis par ledit autre détecteur (1B, 1A).

13. Système selon l'une quelconque des revendications précédentes, **caractérisé en ce que** les détecteurs (1A, 1B) sont disposés pour générer des faisceaux avec une fréquence et/ou une polarisation différente.

Fig. 1

Fig. 2

Fig. 3

Fig. 4

Fig. 5

EP 1 288 879 B1

Fig. 6

EP 1 288 879 B1

Fig. 7

Fig. 8